# EUROPÄISCHE PATENTANMELDUNG

(11) **EP 3 181 319 A1**
(43) Veröffentlichungstag der Anmeldung: **21.06.2017**
(21) Anmeldenummer: 16204976.1
(22) Anmeldetag: 19.12.2016
(51) Int. Cl.: B29B 17/00, B29K 105/24, B29K 707/04, B29B 17/04, B29C 47/00, B29C 43/02, B29K 105/26, B29K 101/10, B29K 709/08, B29K 105/08

(54) **VERFAHREN ZUR HERSTELLUNG VON PRESSMASSEN (BMC) AUS NICHT AUSGEHÄRTETEN PREPREG-ABFÄLLEN**

(30) Priorität: 18.12.2015 DE 102015122308
(71) Anmelder: Airbus Operations GmbH, 21129 Hamburg (DE)
(72) Erfinder: Witte, Tassilo, 21129 Hamurg (DE)

(57) **Zusammenfassung**

Verfahren zum Verwerten von Abfällen von Bahnen oder Strängen aus reaktionsfähiges Harz A enthaltenden Prepreg-Abfällen gekennzeichnet durch die Schritte Homogenisieren von Prepreg-Abfällen, Dispergieren von Füllstoffen und/oder Additiven in reaktionsfähigem Harz B, Vermischen von Harz B, homogenisierten Prepreg-Abfällen, Weiterverarbeiten der Mischung aus Harz, Füllstoffen und/oder Additiven und Prepreg-Abfällen zu geformten Werkstücken.

## Beschreibung

Die Erfindung betrifft ein Verfahren zum werkstofflichen Recycling von nicht ausgehärteten Prepreg-Abfällen zu faserhaltigen Pressmassen (BMC).

Prepregs sind mit reaktivem Harz behandelte flächige oder strangförmige Faserprodukte, die Glas- oder Carbonfasern enthalten. Als Harz kann Epoxidharz verwendet werden. Die verwendeten Epoxidharze werden so eingestellt, dass die bei einer bestimmten Temperatur aushärten. Im Flugzeugbau verwendete Epoxidharze werden meist bei 180°C ausgehärtet, in anderen Technikbereichen sind andere, meist deutlich niedrigere Temperaturen üblich, bei denen die dort verwendeten Epoxidharze härten. Da das reaktive Harz der Prepregs eine begrenzte Lagerfähigkeit aufweist, kann es erforderlich sein, Prepregs gekühlt zu lagern. Nach einer bestimmten Zeit, während der solche Prepregs höheren Temperaturen ausgesetzt waren (etwa Raumtemperatur) können sie nicht mehr uneingeschränkt verwendet werden, da das Harz bereits zu einem zu großen Teil reagiert hat und härtet. Naturgemäß besteht der Wunsch, solches überlagertes Material einer Verwertung zuzuführen. Weiterhin sind insbesondere Carbon-Prepregs recht teuer.

Weiterhin entsteht bei Ablegevorgängen, etwa bei AFP- oder ATL-Prozessen (automated fiber placement, automated tape lying) Verschnitt. Weiterhin können auf den Prepreg-Rollen Reste an Prepreg verbleiben, die nicht mehr abgelegt werden können (Rollenenden). Es können auch ein- oder mehrschichtige Abfälle beim finalen Zuschnitt eines Werkstücks vor dem Aushärten anfallen.

Faserhaltige Pressmassen bestehen aus kurzen Glas- oder Carbonfasern und einem Matrixharz und werden als Bulk Molding Compounds (BMC) bezeichnet. BMC können im Heißpressverfahren verarbeitet werden. Die BMC Masse wird dazu zentral in ein beheiztes, geteiltes Werkzeug eingelegt. Beim Schließen verteilt sich das BMC in der Werkzeugkavität. BMC können auch durch Spritzgießen verarbeitet werden.

BMC können aus einer Mischung von 10 bis 35 % Harz, 10 bis 50 % Fasern, 0 bis 70 % Füllstoffen und/oder Additiven bestehen.

Um aus Prepreg-Abfällen BMC herstellen zu können, kann zunächst das Harz entfernt werden, etwa durch Pyrolyse. Anschließend können die reinen Fasern zerkleinert und erneut mit Harz, Füllstoffen und Additiven vermischt werden.

DE 19514543 C1 offenbart ein Verfahren zum Rückgewinnen und Verwerten von Verschnittabfällen von Bahnen aus noch reaktionsfähigem Harz wobei die Verschnittabfälle in bestimmter Weise zerschnitten werden, die Viskosität des Harzes durch Erwärmen oder Zugabe von Lösungsmittel verringert wird und durch mechanische Schub- und Scherbeanspruchung ein Gemisch aus vereinzelten Fasern und Harz erzeugt wird, das anschließend als Rohstoff weiterverarbeitet wird.

Eine Aufgabe der vorliegenden Erfindung war es, Prepreg-Verschnittabfälle aus nicht ausgehärteten Prepregs einer Verwertung zuzuführen, ohne zunächst das Harz zu entfernen. Es hat sich nun für den Fachmann nicht vorhersehbar herausgestellt, dass ein Verfahren zum Verwerten von Abfällen von Bahnen oder Strängen aus reaktionsfähiges Harz A enthaltenden Kohle- und/oder Glasfasern (Prepreg-Abfälle), gekennzeichnet durch die Schritte
a) Homogenisieren von Bahnen oder Strängen aus reaktionsfähiges Harz A enthaltenden Kohle- und/oder Glasfasern (Prepreg-Abfälle), wobei die Prepreg-Abfälle zerkleinert werden,
b) Dispergieren von Füllstoffen und/oder Additiven in reaktionsfähigem Harz B,
c) Vermischen von Harz B, homogenisierten, reaktionsfähiges Harz A enthaltenden Kohle- und/oder Glasfasern und ggf. Füllstoffen und/oder Additiven, wobei die reaktionsfähigen Harze A und B miteinander kompatibel oder gleich sind,
d) Weiterverarbeiten der Mischung aus Harz, Füllstoffen und/oder Additiven und Prepreg-Abfällen zu geformten Werkstücken, den Nachteilen des Standes der Technik abhilft. Prepreg-Abfälle können so zu faserhaltigen Pressmassen verwertet werden, ohne zuvor die Fasern vom Harz trennen zu müssen. Das erfindungsgemäße Verfahren ermöglicht eine einfache Handhabung der klebrigen Prepreg-Abfälle, eine Verarbeitung großer Materialmengen der Abfälle, mit Einschränkungen sogar einer kontinuierliche Aufbereitung und letztlich die Weiterverwendung dieser Abfälle als neuen Werkstoff.

Zum Zwecke der Klarstellung sei angemerkt, dass Füllstoffe und Additive schlecht voneinander abzugrenzende Begriffe sind. Daher wird im Sinne der Erfindung der Begriff "Füllstoffe und/oder Additive" so verwendet, dass alle derartige Zusätze umfassen sein sollen, ohne zwischen Füllstoffen und Additiven zu differenzieren. Die Füllstoffe und/oder Additive lassen sich insbesondere mit einer Dispergierscheibe gut in das Harz B einarbeiten, dabei ist weiter vorteilhaft, dass die resultierende Mischung zugleich eine homogene Verteilung der Füllstoffe und/oder Additive aufweist, frei von Klumpen hergestellt werden kann und durch den Eintrag mechanischer Energie auf 70°C erwärmt wird, was die Fließeigenschaften verbessert. Besonders elegant gelingt das Homogenisieren im Sinne der Erfindung in einem geschlossenen Raum, in dem Förder- und Scherwirkung, etwa durch eine Schnecke, es erlauben, die Prepreg-Abfälle sowohl zu zerkleinern, als auch zu vermischen. Bevorzugt ist es, wenn das Gewichtsverhältnis aus Harz B zu Prepreg-Abfällen zwischen 2 zu 1 und 1 zu 5 liegt, besonders bevorzugt zwischen 1:1 und 1:2. Bevorzugt ist es, wenn das Gewichtsverhältnis aus der Gesamtheit an Füllstoffen und/oder Additiven zu Prepreg-Abfällen zwischen 2 zu 1 und 1 zu 5 liegt, besonders bevorzugt zwischen 1:1 und 1:2. Bewährte Rezepturen weisen zwischen 1/3 und ½ Prepreg-Abfälle, zwischen 1/3 und ¼ Harz B sowie 1/3 bis ¼ Füllstoffe und/oder Additive auf, jeweils auf die Masse bezogen. Bevorzugt ist es weiterhin, wenn die Homogenisierung der Prepreg-Abfälle mit einem Fallbeil, Schneckenextruder, Doppelschneckenextruder, einer Spritzgießmaschine, einem Gittermesserstempel, einem portalgesteuertem Ultraschallmesser, einem Rollmesser oder einem Walzenbrecher erfolgt. Dabei wird das Fallbeil bei unidirektionalen Fasern so geführt, dass seine Klinge im Wesentlichen quer zur Faserrichtung angeordnet ist. Im Fall von Multiaxialgelegen kann hinter dem Fallbeil ein Rollmesser orthogonal zum Fallbeil angeordnet sein, um zuvor im Wesentlichen parallel zur Klinge des Fallbeils ausgerichtete Fasern ebenfalls zu zerkleinern. Das Fallbeil kann vom Typ Guillotinenmesser (http://www.pierret.com/de/produits/coupeuses/) sein. Wird ein Schneckenextruder, Doppelschneckenextruder oder eine Spritzgießmaschine verwendet, so müssen die Betriebsparameter Schneckengeometrie, Drehzahl und Förderlänge so gewählt und aufeinander abgestimmt werden, dass die in der Masse aus Harz A und Fasern entstehenden Scherkräfte die Fasern auf die gewünschten Abmessungen zerkleinern. Bei Verwendung eines Gittermesserstempels können die zu erreichenden Abmessungen der zerkleinerten Fasern durch die Abmessungen des Gitters recht einfach bestimmt werden. Ein portalgesteuertes Ultraschallmesser, auch als Cutter bezeichnet, ist üblicherweise Teil einer AFP-Anlage. Damit werden die abgelegten Fasern beim AFP auf das gewünschte Maß abgelängt. Ebenso können die unerwünschten Überstände der Fasern so zerschnitten werden, dass sie direkt für den Einsatz in einem erfindungsgemäßen Verfahren geeignet sind. Ein solcher Cutter kann auch unabhängig von einer AFP-Anlage betrieben werden. Rollenmesser können entweder maschinell oder auch manuell geführt werden. Walzenbrecher können die Prepreg-Abfälle gut zerkleinern, wenn die Abfälle spröde sind. Allgemein kann die Sprödigkeit erhöht und dadurch der Zerkleinerungsvorgang erleichtert werden, in dem die Prepreg-Abfälle gekühlt eingesetzt werden, beispielsweise durch Zugabe eines rückstandslos verdampfenden Kühlmittels (flüssiger Stickstoff, Trockeneis) in den Homogenisierapparat. Dies ist nicht möglich bei Extrudern und Spritzgussmaschinen. Eine andere Möglichkeit ist das vorherige Kühlen der Prepreg-Abfälle auf Temperaturen unterhalb von -18°C. Die Faserlänge wird vorteilhaft so gewählt, dass die Fließeigenschaften des resultierenden Produktes auf das herzustellende Bauteil abgestimmt sind. So verleihen längere Fasern einem Bauteil mehr Stabilität, kürzere Fasern erlauben besseres Fließen der Pressmasse und damit die Herstellung komplexerer Geometrien. Bevorzugt ist es, wenn die Prepreg-Abfälle so zerkleinert werden, dass die Faserlänge höchstens 50 mm, bevorzugt 6 bis 30 mm, besonders bevorzugt 10 bis 24 mm beträgt; dabei sollen 95m% der Fasern im angegeben Intervall liegen. Der Streubereich kann bei Verwendung eines Schneckenextruders, Doppelschneckenextruders oder einer Spritzgießmaschine durch die Betriebsparameter Schneckengeometrie, Drehzahl und Förderlänge gesteuert werden. Bevorzugt ist es, wenn die Füllstoffe und/oder Additive einen Gehalt an CaCO₃, bevorzugt Marmor, Talkum, Aluminium- oder Magnesiumhydroxid, MgO, Talkum, Silica Gel, Pigmente und/oder Kieselsäure aufweisen. Aluminiumhydroxid wird auch als Aluminiumtrihydrat bezeichnet und wirkt flammhemmend. Ganz besonders bevorzugt sind Talkum und Aluminiumtrihydrat. Weiterhin ist es besonders bevorzugt, wenn ein Teil der Füllstoffe und/oder Additive in Schritt a) zugegeben wird. Dadurch wird die Klebrigkeit der homogenisierten und zu homogenisierenden Prepreg-Abfälle verringert. Bevorzugt werden 10% der gesamten zuzugebenden Füllstoffe und/oder Additive in Schritt a) zugegeben. Weiterhin ist es besonders bevorzugt, wenn die Schritte a) bis d) in ihrer alphabetischen Reihenfolge durchgeführt werden. Weiterhin ist es besonders bevorzugt, wenn der zeitliche Abstand zwischen Schritt c) und d) höchstens 2 Monate beträgt. Das erfindungsgemäße Verfahrensprodukt reBMC ist bei -18°C bis zu 2 Monate lagerfähig. Weiterhin ist es besonders bevorzugt, wenn Schritt c) bei einer Temperatur von höchstens 80°C, bevorzugt höchstens 60°C erfolgt. Damit erfolgt kein nennenswertes Aushärten des Harzes, denn dies erfordert wenigstens 160°C und wird üblicherweise bei 180°C durchgeführt. Wird das erfindungsgemäße Verfahren für PrepregAbfälle vorgesehen, die bei niedrigeren Temperaturen härten, so muss bei den thermisch belastenden Verfahrensschritten a), b) und c) ein ausreichender Temperaturabstand zu dieser Temperatur eingehalten werden. Weiterhin ist es besonders bevorzugt, wenn Schritt c) entweder in einem Schneckenkneter, Doppel-Z-Kneter, Flügelkneter, Schnellmischer durchgeführt wird. Üblicherweise erfolgt das Mischen diskontinuierlich für 5 bis 15 Minuten, bevorzugt 10 bis 15 Minuten. Es sind kontinuierliche Compoundierverfahren zur Herstellung von BMC bekannt, die im Sinne des erfindungsgemäßen Verfahrens ebenfalls angewendet werden können. Weiterhin ist es besonders bevorzugt, wenn Schritt e) im Heißpress- oder Einspritzgussverfahren erfolgt.

### Figurenbeschreibung

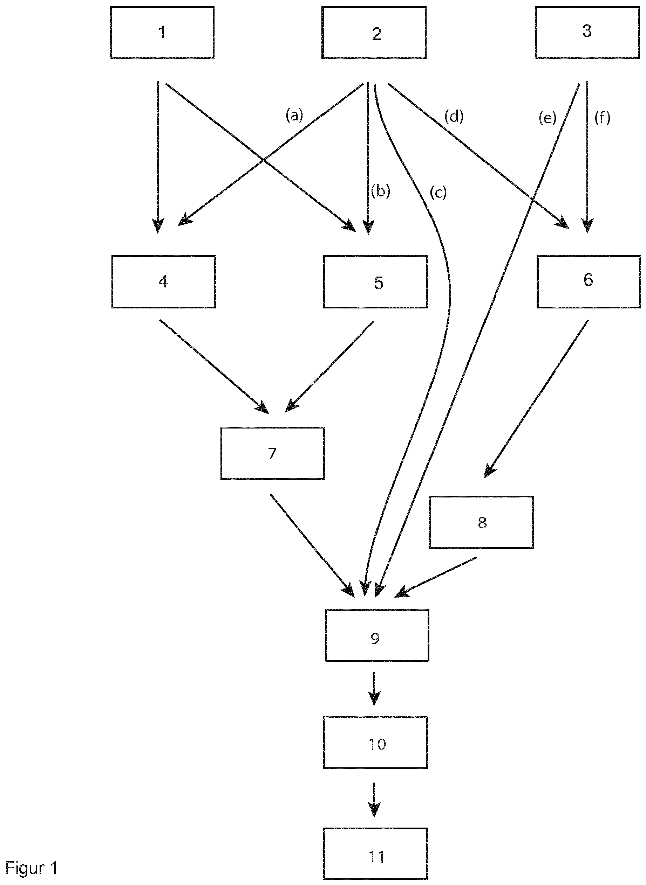

Figur 1 beschreibt erfindungsgemäße Verfahren mit Verfahrensvarianten.
Der gesammelte Prepreg-Abfall (1) muss noch nicht ausgehärtetes Matrixharz enthalten. Verwendet werden können Prepreg-Bänder, Matten, Abschnitte, Reste egal ob unidirektional, Gewebe, ein- oder mehrlagig. Weiter sind Füllstoffe und/oder Additive (2) sowie Harz B (3) erforderlich.

Der Prepreg-Abfall wird einem Homogenisierungsschritt unterworfen: entweder erfolgt Homogenisieren durch Schneiden (4) oder Homogenisieren durch Scheren (5). Beim Homogenisieren durch Schneiden (4) wird der Prepreg-Abfall in Streifen oder kleine Schnipsel zerteilt. Dies kann mittels eines Fallbeils oder eines Gittermesserstempels erfolgen. Eine andere Möglichkeit der Vorbehandlung ist das Homogenisieren durch Scheren (5). Beim Homogenisieren durch Scheren (5) erfolgt beispielsweise ein Extrudieren des Prepreg-Abfalls in einem Schnecken- oder Doppelschnenckenextruder. Dabei wird die Temperatur so eingestellt, dass es nicht zu einer Aushärtung des Matrixharzes kommt. Der entstehende homogenisierte Prepreg-Abfall (7) kann kurze Fasern von 5 bis 20 mm Länge aufweisen, die zufällig orientiert sind.

Harz B (3) und Füllstoffe und/oder Additive (2) können auf unterschiedliche Weise in das Verfahren eingebracht werden. Eine Möglichkeit ist es, Harz B (3) und Füllstoffe und/oder Additive (2) einem Mischapparat zuzuführen (d), (f) und die Füllstoffe und/oder Additive (2) im Harz B (3) zu dispergieren. Dies kann mit einer Dispergierscheibe oder einem Dissolver erfolgen. Dabei wird die Dispersion von Harz B mit Füllstoffen und/oder Additiven (8) erhalten. Eine zweite Möglichkeit ist es, Harz B (3) und Füllstoffe und/oder Additive (2) einem Mischapparat zuzuführen (c), (e), in den auch der homogenisierte Prepreg-Abfall (7) zugeführt wird. In Varianten beider Verfahren wird eine Teilmenge der Füllstoffe und/oder Additive (2) dem Apparat zugeführt (a), in dem das Homogenisieren durch Schneiden (4) erfolgt oder eine Teilmenge der Füllstoffe und/oder Additive (2) wird dem Apparat zugeführt (b), in dem das Homogenisieren durch Scheren (5) erfolgt.

In einen Mischapparat (9) werden Harz (3), Füllstoffe und/oder Additive (2) sowie der homogenisierte Prepreg-Abfall (4) dosiert. Wie beschrieben können entweder alle drei Komponenten direkt dosiert werden oder eine Dispersion (8) von Füllstoffen und/oder Additiven (2) in Harz (3) wird zugegeben. Als Mischapparat (9) besonders geeignet ist ein Doppelschneckenkneter. Das Harz muss so beschaffen sein, dass es mit der Matrix der Prepreg-Abfall kompatibel ist. Es kann insbesondere homogen mit diesem gemischt und erfolgreich ausgehärtet werden. Epoxidharzhaltige Carbon-Prepregs vom Typ Hexply M21 E der Gesellschaft Hexcel, wie sie im Flugzeugbau eingesetzt werden, sind beispielsweise kompatibel mit den Harzen RTM6, M21 und DLS1791, die ebenfalls von der Gesellschaft Hexcel in Verkehr gebracht werden. Zusätzliches Harz ist erforderlich, um Hohlräume in den zufällig orientierten Fasern zu füllen; solche zusätzlichen Hohlräume können darauf zurückzuführen sein, dass die zufällig orientierten Fasern mehr Hohlräume aufweisen bzw. mehr Raum benötigen und so mehr Harz aufnehmen, als unidirektional ausgerichtete Fasern.

Als Füllstoffe und/oder Additive (2) können insbesondere Fließverbesserer eingesetzt werden, etwa CaCO₃ (Kreide oder Marmor), bevorzugt mit einer Teilchengröße von 5 bis 50 Mikrometer, und/oder Magnesium- oder Aluminiumhydroxid, Kieselsäure, Silica Gel; weiter können Trennmittel, Pigmente, Stabilisatoren, Katalysatoren und/oder Inhibitoren verwendet werden.

Es können bezogen auf das Endprodukt BMC 40 bis 70 Gew.% Prepreg-Abfälle, 10 bis 50 Gew.% Harz, 10 bis 30 Gew.% Fließverbesserer, bis zu 5 Gew.% Trennmittel, bis zu 10 Gew.% Pigmente und/oder bis zu 10 Gew.% Katalysatoren und/oder Inhibitoren verwendet werden.

Es kann vom Vorteil sein, zunächst Harz (3) oder Harzdispersion (8) in den Mischapparat (9) vorzulegen, dieses ggf. mit Füllstoffen und/oder Additiven (2) zu vermischen und erst danach die homogenisierten Prepreg-Abfälle (7) zuzugeben. Im Mischapparat (9) wird die Mischung erneut homogenisiert und nach 5 bis 15 Minuten wird als Zwischenprodukt recykliertes BMC (10) (reBMC) erhalten. Dieses kann nachfolgend im Heißpressverfahren (11) zu Werkstücken weiter verarbeitet werden.

### Bezugszeichenliste

- (1): Prepreg-Abfall
- (2): Füllstoffe und/oder Additive
- (3): Harz B
- (4): Homogenisieren durch Schneiden
- (5): Homogenisieren durch Scheren
- (6): Dispergieren
- (7): homogenisierter Prepreg-Abfall
- (8): Dispersion aus Harz B mit Füllstoffen und/oder Additiven
- (9): Mischapparat
- (10): recykliertes BMC
- (11): Weiterverarbeitung
- (a): Zugabe beim Homogenisieren durch Schneiden
- (b): Zugabe beim Homogenisieren durch Scheren
- (c): Zugabe in den Mischapparat
- (d): Zugabe unter Dispergieren

### Beispiele

Beispiel 1: Herstellung von reBMC mit einem Extruder:
   - 500kg Prepreg-Verschnittreste vom Typ Hexcel Hexply M21 E werden ohne Trennfolie oder sonstiges Fremdstoffe - nur Harz und Faser - in einen Extruder, wahlweise Einschnecken- oder Zweischneckenextruder, gegeben.
   - Dort wird das Material bei etwa 70 RPM auf einer Förderschnecke (keine Plastifizierschnecke) mit einer Länge von etwa 1 m, L/D-Verhältnis von >30 und einer maximalen Temp. Von 70°C zerkleinert.
   - Das Prepreg am Anfang der Schnecke eingegeben, etwa bei 1/3 der Länge wird über einen weiteren Zugabe-Schlitz Harz vom Typ Hexcel RTM6 (200kg) und weitere Füllstoffe, z.B. Nabaltec Apyral 40 oder Magnesia 7287 (300kg) zugegeben.
   - Die restlichen 2/3 der Schneckenlänge dienen der Durchmischung der Masse und Homogenisierung der Faserlänge
   - Das Material wird vorne aus dem Extruder ausgegeben
   - Final wird das Material in einem Pressvorgang auf einer beheizbaren Vertikalpresse (Plattenpresse / platen press) in einem geteilten Werkzeug (Ober- und Unterform) (vgl. SMC/BMC) zum finalen Bauteil konsolidiert (Pressdruck 120-140 bar, Temperatur 180° bis Entformbarkeit)
Beispiel 2 Herstellung von reBMC mit Schneideinheit und Kneter:
   - 500kg Prepreg-Verschnittreste Hexcel Hexply M21 E werden ohne Trennfolie oder sonstiges Fremdstoffe in einer Guillotinen-Schneideinheit, bspw. des Herstellers Pierret, Model N45, auf eine durchschnittlich einheitliche Faserlänge gebracht Faserlänge 12-24mm). Die Verwendung einer Schneideinheit ist vorzugsweise bei einlagigen Prepreg (z.B. Restrollen) einzusetzen.
   - Anschließend werden in einem Niemann Kreis-Dissolver Harzkomponente Hexcel RTM6 und Füllstoffe vom Typ Nabaltec Apyral 40 oder Magnesia 7287 vermischt (Harz (200kg) und weitere Füllstoffe, z.B. (300kg)). Alternativ kann das Mischen von Harz und Füllstoffen auch direkt im Kneter erfolgen, da leidet aber die Mischungsqualität.
   - Vorgemischtes Harz und geschnittenes Prepreg werden in den Doppel-Z-Kneter gegeben und ca 10min bei 60-100RPM vermischt.
   - Final wird das Material in einem Pressvorgang auf einer beheizbaren Vertikalpresse (Plattenpresse / platen press) in einem geteilten Werkzeug (Ober- und Unterform) (vgl. SMC/BMC) zum finalen Bauteil konsolidiert (Pressdruck 120-140 bar, Temperatur 180° bis Entformbarkeit)
Beispiel 3 - Herstellung von reBMC mit Extruder und Kneter:
   - 500kg Prepreg-Verschnittreste Hexcel Hexply M21 E werden ohne Trennfolie oder sonstiges Fremdstoffe in einen Extruder, wahlweise Einschnecken- oder Zweischneckenextruder, gegeben und darin bei ca. 70 RPM und max 70°C auf eine durchschnittlich einheitliche Faserlänge gebracht (Stochastische Verteilung der Faserlänge um einen durch diese Prozessparameter definierten Wert).
   - Anschließend werden in einem Dissolver (z.B. einem Niemann Kreis-Dissolver) Harzkomponente Hexcel RTM6 und Füllstoffe Nabaltec Apyral 40 oder Magnesia 7287 vermischt (Harz (200kg) und weitere Füllstoffe (300kg)). Alternativ kann das Mischen von Harz und Füllstoffen auch direkt im Kneter erfolgen, da leidet aber die Mischungsqualität.
   - Vorgemischtes Harz und geschnittenes Prepreg werden in den Doppel-Z-Kneter z.B. vom Hersteller Linden, Typ K II 450 gegeben und ca 10min bei 60-100RPM vermischt.
   - Final wird das Material in einem Pressvorgang auf einer beheizbaren Vertikalpresse (Plattenpresse / platen press) in einem geteilten Werkzeug (Ober- und Unterform) (vgl. SMC/BMC) zum finalen Bauteil konsolidiert (Pressdruck 120-140 bar, Temperatur 180° bis Entformbarkeit)

## Patentansprüche

1. Verfahren zum Verwerten von Abfällen von Bahnen oder Strängen aus reaktionsfähiges Harz A enthaltenden Kohle- und/oder Glasfasern (Prepreg-Abfälle) **gekennzeichnet durch** die Schritte
a) Homogenisieren von Bahnen oder Strängen aus reaktionsfähiges Harz A enthaltenden Kohle- und/oder Glasfasern (Prepreg-Abfälle), wobei die Prepreg-Abfälle zerkleinert werden,
b) Dispergieren von Füllstoffen und/oder Additiven in reaktionsfähigem Harz B,
c) Vermischen von Harz B, homogenisierten, reaktionsfähiges Harz A enthaltenden Kohle- und/oder Glasfasern und ggf. Füllstoffen und/oder Additiven, wobei die reaktionsfähigen Harze A und B miteinander kompatibel oder gleich sind,
d) Weiterverarbeiten der Mischung aus Harz, Füllstoffen und/oder Additiven und Prepreg-Abfällen zu geformten Werkstücken.

2. Verfahren nach Patentanspruch 1 **dadurch gekennzeichnet, dass** das Gewichtsverhältnis aus Harz B zu Prepreg-Abfällen zwischen 2 zu 1 und 1 zu 5 liegt.

3. Verfahren nach einem der Patentansprüche 1 bis 2 **dadurch gekennzeichnet, dass** das Gewichtsverhältnis aus der Gesamtheit an Füllstoffen und/oder Additiven zu Prepreg-Abfällen zwischen 2 zu 1 und 1 zu 5 liegt.

4. Verfahren nach einem der vorangehenden Patentansprüche **dadurch gekennzeichnet, dass** die Homogenisierung der Prepreg-Abfälle mit einem Fallbeil, Schneckenextruder, Doppelschneckenextruder, einer Spritzgießmaschine, einem Gittermesserstempel, einem portalgesteuertem Ultraschallmesser, einem Rollmesser oder einem Walzenbrecher erfolgt.

5. Verfahren nach einem der vorangehenden Patentansprüche **dadurch gekennzeichnet, dass** die Prepreg-Abfälle so zerkleinert werden, dass die Faserlänge höchstens 50 mm beträgt.

6. Verfahren nach einem der vorangehenden Patentansprüche **dadurch gekennzeichnet, dass** die Füllstoffe und/oder Additive einen Gehalt an CaCO₃, Talkum, Aluminium- oder Magnesiumhydoxid, MgO Talkum, Silica Gel, Pigmenten und/oder Kieselsäure aufweisen.

7. Verfahren nach einem der vorangehenden Patentansprüche **dadurch gekennzeichnet, dass** ein Teil der Füllstoffe und/oder Additive in Schritt a) zugegeben wird.

8. Verfahren nach einem der vorangehenden Patentansprüche **dadurch gekennzeichnet, dass**, die Schritte a) bis d) in ihrer alphabetischen Reihenfolge erfolgen.

9. Verfahren nach einem der vorangehenden Patentansprüche **dadurch gekennzeichnet, dass** der zeitliche Abstand zwischen Schritt c) und d) höchstens 2 Monate beträgt.

10. Verfahren nach einem der vorangehenden Patentansprüche **dadurch gekennzeichnet, dass** Schritt c) bei einer Temperatur von höchstens 70°C erfolgt.
Aushärten des Harzes erfordert wenigstens 160°C, Wunschbereich 180°C.

11. Verfahren nach einem der vorangehenden Patentansprüche **dadurch gekennzeichnet, dass** Schritt c) entweder in einem Schneckenkneter, Doppel-Z-Kneter, Flügelkneter, Schnellmischer durchgeführt wird.

12. Verfahren nach einem der vorangehenden Patentansprüche **dadurch gekennzeichnet, dass** Schritt e) im Heißpress- oder Einspritzgussverfahren erfolgt.
